# EUROPEAN PATENT APPLICATION

(11) **EP 4 358 214 A1**
(43) Date of publication of application: **24.04.2024**
(21) Application number: 23771099.1
(22) Date of filing: 15.03.2023
(51) Int. Cl.: H01M 10/04, B65H 45/101

(54) **ELECTRODE ASSEMBLY, MANUFACTURING APPARATUS FOR ELECTRODE ASSEMBLY, AND MANUFACTURING METHOD FOR ELECTRODE ASSEMBLY**

(30) Priority: 15.03.2022 KR 20220032112
(71) Applicant: LG Energy Solution, Ltd., Seoul 07335 (KR)
(72) Inventor: KIM, Jong Seok, Daejeon 34122 (KR); YOON, Se Hyun, Daejeon 34122 (KR); KWON, Chun Ho, Daejeon 34122 (KR); KIM, Beomsu, Daejeon 34122 (KR); KIM, Yong Nam, Daejeon 34122 (KR); KIM, Heeyong, Daejeon 34122 (KR); PARK, Dong Hyeuk, Daejeon 34122 (KR)
(74) Representative: Goddar, Heinz J.
(86) International application number: PCT/KR2023/003485
(87) International publication number: WO 2023/177220

(57) **Abstract**

The present application relates to an electrode assembly, and an apparatus and method for manufacturing the same.

## Description

### [Technical Field]

This application claims priority to and the benefit of Korean Patent Application No. 10-2022-0032112 filed in the Korean Intellectual Property Office on March 15, 2022, the entire contents of which are incorporated herein by reference.

The present invention relates to an electrode assembly and an apparatus and method for manufacturing the same.

### [Background Art]

Unlike primary batteries, secondary batteries are rechargeable and have been widely researched and developed in recent years because of the potential for small-scale and high capacity. As development of technologies and demands for mobile devices are increased, there is a rapidly increasing demand for rechargeable batteries as energy sources.

According to the shape of a battery casing, secondary batteries are classified into coin type batteries, cylindrical batteries, prismatic batteries, and pouch type batteries. In the secondary battery, an electrode assembly mounted inside the battery casing is a power generator capable of charging and discharging, consisting of a layered structure of electrodes and a separator.

The electrode assembly may be generally classified into a jelly-roll type, a stack type, and a stack-and-fold type. A jelly-roll type is wound with a separator interposed between the positive and negative electrodes of a sheet type to which an active material has been applied. A stack type includes a plurality of positive and negative electrodes sequentially stacked with a separator interposed between them. A stack-and-fold type includes unit cells of the stack type that are wound with a long length of separation film.

The stack-and-fold type of electrode assembly, is manufactured using a plurality of electrodes in a form in which the separator is folded into a zigzag shape and the electrodes are positioned in between.

In this process, heat and pressure are applied to produce an adhesive force between the electrode and the separator. However, due to the inclusion of a plurality of electrodes, heat and pressure must be applied many times in order to produce the adhesive force between the electrode and the separator, and there has been a problem of non-uniformity in the production of the electrode assembly due to temperature non-uniformity between the electrodes.

To solve these problems, a method of heating and stacking individual electrodes by a contact heater, in which a heat source (or heating element) physically contacts and heats the electrodes, has been introduced and applied. However, when using the contact heater, all electrodes in the electrode assembly need to be heated to the same temperature. That is, even though the electrodes and the separator are stacked, with individual electrodes heated by the contact heater and supplied, there have still been problems in that, after stacking, heat loss (cooling) occurs in the process of transporting the stacked material including the electrodes and separator, etc., and it is difficult to maintain temperature uniformity between the electrodes in the process of further heating the stacked material to complete the final electrode assembly. Further, there has been a problem in that performance of the electrode assembly is not uniform. That is, there has been a problem of performance non-uniformity of the electrode assembly such as adhesive force and ventilation of the electrodes and the separator due to mean absolute deviation between the electrodes.

Therefore, there is a need for a method of individually heating the electrodes only when necessary to maintain a predetermined temperature range.

### [Detailed Description of the Invention]

### [Technical Problem]

The present invention has been made in an effort to provide an electrode assembly and an apparatus and method for manufacturing the same.

### [Technical Solution]

An exemplary embodiment of the present invention provides an apparatus for manufacturing an electrode assembly including a first electrode, a separator, and a second electrode, the apparatus including: a stack table on which the first electrode, the separator, and the second electrode are stacked and the stacked material including the first electrode, the separator, and the second electrode is placed; a separator supplier configured to supply the separator to the stack table; a first electrode supplier configured to supply the first electrode to the stack table; a second electrode supplier configured to supply the second electrode to the stack table; a first electrode stacking unit configured to stack the first electrode supplied by the first electrode supplier onto the stack table; and a second electrode stacking unit configured to stack the second electrode supplied by the second electrode supplier onto the stack table, in which at least one of the first electrode supplier, the second electrode supplier, the first electrode stacking unit, and the second electrode stacking unit includes a non-contact heater that is not in physical direct contact with an object to be heated and heats the object to be heated, and in which the first electrode and the second electrode are heated by the heater, respectively.

In addition, an exemplary embodiment of the present invention provides a method of manufacturing an electrode assembly including a first electrode, a separator, and a second electrode, the method including: supplying the separator to a stack table and stacking the separator while heating the separator; heating the first electrode with a non-contact heater configured to heat an object to be heated without physically coming in direct contact with the object to be heated, and supplying the first electrode to the stack table and stacking the first electrode; and heating the second electrode with the non-contact heater configured to heat an object to be heated without physically coming in direct contact with the object to be heated, and supplying the second electrode to the stack table and stacking the second electrode, wherein a stacked material including the first electrode, the separator, and the second electrode is placed on the stack table.

Lastly, an exemplary embodiment of the present invention provides an electrode assembly including: a first electrode; a separator; and a second electrode, in which the first electrode, the separator, and the second electrode are stacked along a stacking axis, and in which a thickness of the separator stacked in the middle of the electrode assembly is 1 to 1.09 times thicker than a thickness of the separator stacked at the outermost portion of the electrode assembly.

### [Advantageous Effects]

The apparatus for manufacturing the electrode assembly and the method of manufacturing the electrode assembly according to an exemplary embodiment of the present application may reduce time for manufacturing an electrode assembly because each electrode may be heated selectively only when necessary.

The apparatus for manufacturing the electrode assembly and the method of manufacturing the electrode assembly according to an exemplary embodiment of the present application may easily adjust temperature of the electrodes to a predetermined temperature range only when selectively required, thereby reducing temperature deviation between the electrodes, thereby providing the electrode assembly with uniform performance.

The apparatus for manufacturing an electrode assembly and the method for manufacturing the electrode assembly according to an exemplary embodiment of the present application may heat each of the electrodes with a different temperature. Therefore, it is possible to reduce the temperature non-uniformity (mean absolute deviation) between the electrodes due to cooling that occurs in the process of transferring the stacked material including the electrodes during the process of manufacturing the electrode assembly and external heating such as pressing and heating the stacked material including the electrodes and the separator to manufacture the finished electrode assembly, and thus provide the electrode assembly with uniform performance.

### [Brief Description of Drawings]

FIG. 1 is a top plan view exemplarily illustrating an apparatus for manufacturing an electrode assembly according to an exemplary embodiment of the present invention.
FIG. 2 is a front view illustrating a concept of the apparatus for manufacturing the electrode assembly according to an exemplary embodiment of the present invention.
FIG. 3 is a cross-sectional view illustrating an electrode assembly manufactured by the apparatus for manufacturing the electrode assembly according to an exemplary embodiment of the present invention.
FIG. 4 is a perspective view illustrating a press unit in the apparatus for manufacturing the electrode assembly according to an exemplary embodiment of the present invention.
FIG. 5 is a perspective view exemplarily illustrating a state in which the press unit presses a stacked material in the apparatus for manufacturing the electrode assembly according to an exemplary embodiment of the present invention.
FIG. 6 is a perspective view illustrating a stack table in the apparatus for manufacturing the electrode assembly according to an exemplary embodiment of the present invention.
FIG. 7 is a perspective view illustrating a separator supplier of the apparatus for manufacturing the electrode assembly in accordance with an exemplary embodiment of the present invention.
FIG. 8 is a perspective view illustrating a first electrode resting table in the apparatus for manufacturing the electrode assembly, according to an exemplary embodiment of the present invention.
FIG. 9 is a perspective view illustrating a second electrode resting table in the apparatus for manufacturing the electrode assembly, according to an exemplary embodiment of the present invention.
FIG. 10 is a perspective view illustrating a first suction head in the apparatus for manufacturing the electrode assembly, according to an exemplary embodiment of the present invention.
FIG. 11 is a bottom plan view illustrating the first suction head in the apparatus for manufacturing the electrode assembly, according to different exemplary embodiments of the present invention.
FIG. 12 is a top plan view illustrating a holding device and a stack table in the apparatus for manufacturing the electrode assembly, according to an exemplary embodiment of the present invention.
FIG. 13 is a front elevation view schematically illustrating an apparatus for manufacturing the electrode assembly, according to another exemplary embodiment of the present invention.

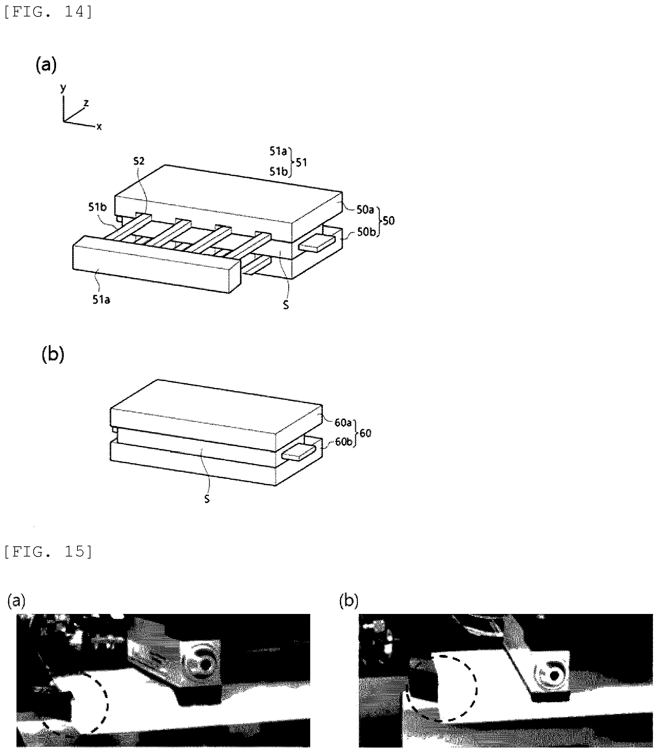

Part (a) of FIG. 14 is a perspective view illustrating a first press unit 50 according to an exemplary embodiment of the present invention, and part (b) of FIG. 14 is a perspective view illustrating a second press unit 60 according to an exemplary embodiment of the present invention.

Part (a) of FIG. 15 is a photographed image illustrating an electrode assembly according to Comparative Example 1, and part (b) of FIG. 15 is a photographed image illustrating an electrode assembly according to Example 1.

### [Explanation of Reference Numerals and Symbols]

10: Electrode assembly
11: First electrode
11a: First electrode tab
12: Second electrode
12a: Second electrode tab
14: Separator
51: Gripper
51a: Main body
51b: Fixing part
100 and 200: Apparatus for manufacturing electrode assembly
110: Stack table
111: Table body
112: Stack table heater
120: Separator supplier
121: Separator heating unit
121a: Body
121b: Separator heater
122: Separator roll
130: First electrode supplier
131: First electrode resting table
132: First electrode heater
133: First electrode roll
134: First cutter
135: First conveyor belt
136: First electrode supply head
140: Second electrode supplier
141: Second electrode resting table
142: Second electrode heater
143: Second electrode roll
144: Second cutter
145: Second conveyor belt
146: Second electrode supply head
150: First electrode stacking unit
151: First suction head
151a: Vacuum suction hole
151b: Bottom surface
152: First electrode non-contact heater
153: First moving unit
160: Second electrode stacking unit
161: Second suction head
162: Second electrode non-contact heater
163: Second moving unit
170: Holding device
171: First holding device
172: Second holding device
180: Press unit
181: First pressing block
182: Second pressing block
183, 184: Press heater
290: Vision device
291: First camera
292: Second camera
R: Rotating unit
S: Stacked material

### [Best Mode]

Hereinafter, embodiments of the present invention will be described in detail so that those with ordinary skill in the art to which the present invention pertains may easily carry out the exemplary embodiments. However, the present invention may be implemented in various different ways and is not limited to the configurations described herein.

Throughout the present specification, unless explicitly described to the contrary, the words "comprise" or "include" and variations, such as "comprises", "comprising", "includes" or "including", mean the inclusion of the stated constituent elements, without excluding any other constituent elements.

In the present specification, "p to q" means "p or more, q or less".

In the present specification, "holding device" is a device that performs a function of gripping the stacked material stacked on the stack table in order to stack the first electrode or the second electrode, in a process of manufacturing a stacked material in which the first electrode, the separator, and the second electrode are stacked in a form in which the first electrode and the second electrode are alternately disposed between the separator, which is folded on the stack table. The function of the holding device is different from a gripper, which grips the stacked material in the process of heating and pressing the stacked material. A specific operation process of the holding device may be referenced in a description of a method of manufacturing an electrode assembly which will be described later.

In the present specification, stacking in a form in which the first electrode and the second electrode are alternately disposed between the separator being folded is referred to as zig zag stacking.

The folded separator may mean that a separator is stacked with the separator overlapping in a zigzag manner. More specifically, the separator is stacked in a zigzag manner by being folded in a form that alternately reciprocates between the left side of a stacking axis and the right side of the stacking axis. Further, the first electrode and the second electrode are stacked by being disposed alternately between successive layers of the stacked separator. Here, the stacking axis refers to an imaginary axis which is parallel to a direction in which the first electrode, the separator, and the second electrode are stacked and passes through the center of the stacked material on which the electrodes and separator are stacked.

In the present specification, "heating" may be used interchangeably with adding heat.

In this present specification, the "stacked material" may correspond to an unfinished electrode assembly. In addition, in the present specification, in case that the step of heating and pressing the stacked material has been completed, this state may be referred to as a completed electrode assembly, and in the present specification, unless otherwise mentioned, the term electrode assembly' refers to a completed electrode assembly.

In addition, in the present specification, an uppermost end and lowermost end of the electrode assembly may be positions corresponding to upper and lower surfaces of the stacked material, respectively, or to bottom and top surfaces of the unfinished electrode assembly.

In the description of embodiments of the present invention, the specific descriptions of well-known related technologies will be omitted when it is determined that the specific descriptions may unnecessarily obscure the subject matter of the present invention.

An exemplary embodiment of the present invention provides an apparatus for manufacturing an electrode assembly including a first electrode, a separator, and a second electrode. The apparatus includes a stack table on which the first electrode, the separator, and the second electrode are stacked and the stacked, where material includes the first electrode, the separator, and the second electrode. The apparatus also includes a separator supplier configured to supply the separator to the stack table; a first electrode supplier configured to supply the first electrode to the stack table; a second electrode supplier configured to supply the second electrode to the stack table. The apparatus also includes a first electrode stacking unit and a second electrode stacking unit, where the first electrode stacking unit is configured to stack the first electrode supplied by the first electrode supplier onto the stack table, and the second electrode stacking unit is configured to stack the second electrode supplied by the second electrode supplier onto the stack table. At least one of the first electrode supplier, the second electrode supplier, the first electrode stacking unit, and the second electrode stacking unit is not in physical direct contact with an object to be heated, and the apparatus includes a non-contact heater configured to heat the first electrode or the second electrode.

In an exemplary embodiment of the present invention, at least one of the first electrode supplier and the second electrode supplier may include the non-contact heater.

In an exemplary embodiment of the present invention, the first electrode supplier and the second electrode supplier may each include the non-contact heater.

In an exemplary embodiment of the present invention, at least one of the first electrode stacking unit and the second electrode stacking unit may include the non-contact heater.

In an exemplary embodiment of the present invention, the first electrode stacking unit and the second electrode stacking unit may each include the non-contact heater.

The electrode assembly of the apparatus for manufacturing the electrode assembly according to an exemplary embodiment of the present invention may be stacked in a form such that the separator is folded and stacked in a zigzag manner, and the first electrode and the second electrode are alternately and respectively stacked between the stacked separator.

According to an exemplary embodiment of the present invention, the electrode assembly of the apparatus for manufacturing the electrode assembly may be in the form in which the separator is folded in a zigzag shape and the first electrode and the second electrode are alternately disposed between the folded separator.

The first electrode supplier of the apparatus for manufacturing the electrode assembly according to an exemplary embodiment of the present invention further includes a first electrode resting table on which the first electrode is rested before being stacked on the stack table by the first electrode stacking unit, and the second electrode supplier further includes a second electrode resting table on which the second electrode is rested before being stacked on the stack table by the second electrode stacking unit, wherein at least one of the first electrode resting table and the second electrode resting table includes a non-contact heater.

In an exemplary embodiment of the present invention, at least one of the first electrode resting table and the second electrode resting table may include the non-contact heater.

In an exemplary embodiment of the present invention, the first electrode resting table and the second electrode resting table may each include a non-contact heater.

According to an exemplary embodiment, the first electrode stacking unit further include a first suction head configured to vacuum suction the first electrode resting on the first electrode resting table and the second electrode stacking unit further includes a second suction head configured to vacuum suction the second electrode resting on the second electrode resting table, where at least one of the first suction head and the second suction head comprises the non-contact heater.

In an exemplary embodiment of the present invention, at least one of the first suction head and the second suction head may include the non-contact heater.

In an exemplary embodiment of the present invention, the first suction head and the second suction head may each include the non-contact heater.

That is, components associated with the supply of electrodes may each include the non-contact heater.

The apparatus for manufacturing an electrode assembly according to an exemplary embodiment of the present invention may further include a press unit that heats and presses the stacked material.

The press unit according to an exemplary embodiment of the present invention may be configured to heat and press the stacked material stacked on the stack table.

The press unit, according to an exemplary embodiment of the present invention, may be configured to move the stacked material stacked on the stack table to the press unit, and then heat and press the stacked material.

An exemplary embodiment of the present invention provides an apparatus for manufacturing an electrode assembly including a first electrode, a separator, and a second electrode. The apparatus includes a separator supplier configured to supply the separator to a stack table; a first electrode supplier configured to supply the first electrode to the stack table; a second electrode supplier configured to supply the second electrode to the stack table; and the stack table on which a stacked material is manufactured. The stacked material includes the first electrode, the separator, and the second electrode. The apparatus also includes a first electrode stacking unit configured to stack the first electrode supplied from the first electrode supplier on the stack table, and a second electrode stacking unit configured to stack the second electrode supplied from the second electrode supplier on the stack table. The apparatus also includes a press unit configured to heat and press the stacked material stacked on the stack table. At least one of the first electrode supplier, the second electrode supplier, the first electrode stacking unit, and the second electrode stacking unit is not in physical direct contact with an object to be heated, and such component includes a non-contact heater configured to heat the first electrode or the second electrode.

In an exemplary embodiment of the present invention, the first electrode stacking unit may be configured to stack and press the first electrode supplied by the first electrode supplier on the stack table to adhere the first electrode and the separator, and the second electrode stacking unit may be configured to stack and press the second electrode supplied by the second electrode supplier on the stack table to adhere the second electrode and the separator. In the process of pressurization, heating may also be simultaneously performed.

In a case where the first electrode and second electrode stacking units stack and press the first and second electrodes on the stack table to adhere the electrodes and the separator, and in a case where the first and second suction heads each include the non-contact heater, an exemplary embodiment of the present invention provides an apparatus for manufacturing an electrode assembly by stacking the first electrode, the separator, and the second electrode. The apparatus includes a stack table on which the first electrode, the separator, and the second electrode are stacked in a form in which the first electrode and the second electrode are alternatively disposed between the separator being folded. The apparatus also includes a separator supplier configured to heat the separator to supply the separator to the stack table; a first electrode supplier configured to heat and supply the first electrode; and a second electrode supplier configured to heat and supply the second electrode. The apparatus also includes a first electrode stacking unit configured to stack the first electrode supplied from the first electrode supplier on the stack table and press the first electrode to adhere the first electrode and the separator; and a second electrode stacking unit configured to stack the second electrode supplied from the second electrode supplier on the stack table and press the second electrode to adhere the second electrode and the separator. The first electrode supplier includes a first electrode resting table on which the first electrode rests before the first electrode is stacked on the stack table by the first electrode stacking unit, and the second electrode supplier includes a second electrode resting table on which the second electrode rests before the second electrode is stacked on the stack table by the second electrode stacking unit. The first electrode stacking unit includes a first suction head configured to vacuum suction the first electrode resting on the first electrode resting table, and the second electrode stacking unit includes a second suction head configured to vacuum suction the second electrode resting on the second electrode resting table, in which the first suction head and the second suction head each include a non-contact heater for heating the first or second electrodes. In this case, in the process of pressurization, heating may also be simultaneously processed. That is, the apparatus may include the first electrode stacking unit that stacks the first electrode supplied by the first electrode supplier on the stack table and heats and presses the first electrode to adhere the first electrode and the separator; and the second electrode stacking unit that stacks the second electrode supplied by the second electrode supplier on the stack table and heats and presses the second electrode to adhere the second electrode and the separator. The heating may be performed with the non-contact heater as described above.

According to an exemplary embodiment of the present application, the non-contact heater may transfer heat by radiation or induction heating to heat the first electrode or the second electrode.

According to an exemplary embodiment of the present invention, the non-contact heater may include a heating element configured to provide heat to the object to be heated, and a recessed housing configured to keep the heating element from being in physical contact with the object to be heated.

According to an exemplary embodiment of the present application, the non-contact heater may transfer heat by radiation. In particular, the non-contact heater may be a non-contact infrared heater (IR heater).

The apparatus for manufacturing the electrode assembly according to the present application has the advantage that, by using the non-contact heater, it is easy to selectively heat the electrodes only when necessary, and it is possible to heat the electrodes quickly to the desired temperature. Therefore, each individual electrode may be heated with a different temperature. Therefore, the apparatus may reduce temperature non-uniformity between the electrodes resulting from cooling that occurs in the process of transferring the stacked material including the electrodes during the electrode assembly manufacturing and external heating such as pressurization and heating of the stacked material including the electrodes and the separator to manufacture a finished electrode assembly, thereby providing the electrode assembly with uniform performance. In this case, as described above, it is preferred that the non-contact heater transfers heat by radiation, and a specific example is a non-contact infrared heater (IR heater), but is not limited thereto.

In addition, since the first electrode resting table, the second electrode resting table, the first suction head, the second suction head, and the like included in the configuration of the first electrode and the second electrode suppliers and the first electrode and the second electrode stacking units each include a non-contact heater, it is possible to selectively heat individual electrodes when necessary to satisfy a specific temperature (hereinafter referred to as a management temperature) range while minimizing deformation of the structure. For example, with a non-contact heater, the electrodes making up the electrode assembly may be stacked so that outer electrodes are heated to a lower temperature and the center electrodes are heated to a higher temperature, thereby being stacked in a temperature range that satisfies the controlled temperature of the individual electrodes. Accordingly, temperature deviation (mean absolute deviation) between electrodes may be reduced without structural deformation of the structure (unfinished electrode assembly). Therefore, the electrode assembly with uniform performance may be provided.

The apparatus for manufacturing the electrode assembly according to an exemplary embodiment of the present invention may further include a temperature sensor configured to measure a surface temperature of the first electrode and the second electrode, and a controller configured to adjust a heating temperature of the non-contact heater based on a temperature measured by the temperature sensor to adjust the surface temperature of the first electrode and the second electrode to the controlled temperature range.

In an exemplary embodiment of the present invention, the controlled temperature range may be from 50°C to 140°C, preferably from 60°C to 120°C. Maintaining a controlled temperature in such range has the advantage of relatively easy adhesion without deformation of the structure in the process of pressing the electrode to adhere to the separator. When temperature is lower than the temperature described above, the adhesion of the electrode and separator may be weakened, resulting in a separation of the cell assembly and lower productivity. When temperature is higher than the temperature described above, the separator ventilation may become too large, resulting in poor product performance.

In an exemplary embodiment of the present invention, heating may be applied in the process of adhering the first electrode and the separator and in the process of adhering the second electrode and the separator.

The process of adhering the first electrode and the separator and the process of adhering the second electrode and the separator may be a process of heating and pressing.

In an exemplary embodiment of the present invention, the controller may perform a function of stopping an operation of the non-contact heater when a surface temperature of the first electrode and the second electrode is adjusted to the controlled temperature range. That is, the apparatus for manufacturing the electrode assembly of the present invention may only operate the non-contact heater to apply heat to the electrodes when necessary. The controller may adjust whether the non-contact heater operates.

According to an exemplary embodiment of the present invention, the stack table may include a table body on which the first electrode, the separator, and the second electrode are stacked; and a stack table heater configured to heat the table body to heat the stacked material that is stacked.

According to exemplary embodiment of the present invention, the stack table heater may be a non-contact heater that does not physically come into direct contact with an object to be heated and heats the object to be heated.

According to an exemplary embodiment of the present invention, the first electrode stacking unit may be configured to stack the first electrode supplied by the first electrode supplier on the stack table and heat and press the first electrode to adhere the first electrode and the separator.

According to an exemplary embodiment of the present invention, the second electrode stacking unit may be configured to stack the second electrode supplied by the second electrode supplier on the stack table and heat and press the second electrode to adhere the first electrode and the separator.

According to an exemplary embodiment of the present invention, the first electrode stacking unit stacking the first electrode on the stack table and heating and pressing to adhere the first electrode and the separator and the second electrode stacking unit stacking the second electrode on the stack table and heating and pressing to adhere the second electrode and the separator may each independently operate under a temperature condition of 40°C or more, and 110°C or less, preferably 50°C or more and 100°C or less, and a pressure condition of 0.3 Mpa or more and 5 Mpa or less, preferably 1.5 Mpa or more and 5 Mpa or less.

According to an exemplary embodiment of the present invention, the heating and pressing may be performed for at least 5 seconds and no more than 60 seconds, preferably at least 5 seconds and no more than 30 seconds.

The condition described above may apply to the steps of stacking the first electrode on the stack table and heating and pressing the first electrode to adhere the first electrode and the separator; and stacking the first electrode on the stack table and heating and pressing the first electrode to adhere the first electrode and the separator.

When the above-described temperature, pressure, and time conditions are satisfied, a proper level of adhesion and ventilation of the electrodes and separator including the electrode assembly may be obtained while minimizing damage to unit electrodes constituting the electrode assembly.

According to an exemplary embodiment of the present invention, a press unit may be further included to press the stacked material. The heating and pressing of the stacked material by the press unit may be referred to as a heat pressing step. According to an exemplary embodiment of the present invention, the heat pressing step may include: a first heat pressing step in which the stacked material is gripped by a gripper and the stacked material is heated and pressed; and a second heat pressing step, occurring after the first heat pressing step, in which the gripping by the gripper is stopped and the stacked material is heated and pressed.

The press unit according to an exemplary embodiment of the present invention may be configured to heat and press the stacked material stacked on the stack table.

The press unit, according to an exemplary embodiment of the present invention, may be configured to move the stacked material stacked on the stack table to the press unit, and then heat and press the stacked material.

According to an exemplary embodiment of the present invention, the first heat pressing step may include: pressing an upper surface of the stacked material to fix the stacked material using the gripper; moving the stacked material fixed by the gripper between a pair of pressing blocks including a press heater; surface-pressing the fixed stacked material while the pair of pressing blocks moves in a direction facing each other along a stacking axis of the stacked material; and heating the stacked material fixed by the press heater.

According to an exemplary embodiment of the present invention, the second heat pressing step may include: stopping the heating and pressing of the stacked material after the first heat pressing step; spacing the gripper apart from the stacked material; moving the stacked material from which the gripper is spaced apart between the pair of pressing blocks including the press heater; pressing the stacked material while the pair of pressing blocks moves in a direction facing each other along the stacking axis of the stacked material from which the gripper is spaced apart; and heating the stacked material by the press heater.

According to an exemplary embodiment of the present invention, the pressing block used in the first heat pressing step may have a groove corresponding to the gripper.

According to an exemplary embodiment of the present invention, the spacing of the gripper apart from the stacked material may include: stopping the pressing of an upper surface of the stacked material using the gripper; and spacing the gripper apart from the stacked material.

Further, the moving of the stacked material between the pair of pressing blocks including the press heater in the heat pressing step (including the first and second heat pressing steps) may include not only moving the stacked material itself, but also moving the stacked material together with the stack table in the state that the stacked material rests on the stack table. In this case, the pair of pressing blocks and the object being heated and pressed by the press heater may mean the stacked material and the stack table.

In an exemplary embodiment of the present application, the first heat pressing step may be configured to heat and press the stacked material at a temperature condition of 50°C to 90°C and a pressure condition of 0.3 Mpa to 3 Mpa for 10 seconds to 30 seconds. More preferably, the stacked material may be heated and pressed at a temperature condition of 65°C to 75°C and a pressure condition of 1.5 Mpa to 2 Mpa for 10 seconds to 20 seconds.

In an exemplary embodiment of the present application, the second heat pressing step may be configured to heat and press the stacked material at a temperature condition of 50°C to 90°C and a pressure condition of 0.3 Mpa to 6 Mpa for 5 seconds to 60 seconds, preferably at a temperature condition of 65°C or more and 90°C or less, and a pressure condition of 1.5 Mpa to 6 Mpa, for 5 seconds to 30 seconds. More preferably, the stacked material may be heated and pressed at a temperature condition of 65°C to 85°C and a pressure condition of 3 Mpa to 5.5 Mpa for 7 seconds to 25 seconds.

When heated and pressed while satisfying the conditions described above, the adhesion of the electrodes and separator of the stacked material including the first electrode, the separator, and the second electrode may be relatively easily obtained without damaging the first electrode, the separator, and the second electrode, and performance of the manufactured electrode assembly may be excellent.

Further, in an exemplary embodiment of the present application, the conditions of the second heat press described above may be applied to the temperature conditions, pressure conditions, and time conditions of the heat pressing step. That is, the heat pressing step may be configured to heat and press the stacked material at a temperature condition of 50°C to 90°C and a pressure condition of 0.3 Mpa to 6 Mpa for 5 seconds to 60 seconds, preferably at a temperature condition of 65°C or more and 90°C or less, and a pressure condition of 1.5 Mpa to 6 Mpa, for 5 seconds to 30 seconds. More preferably, the stacked material may be heated and pressed at a temperature condition of 65°C to 85°C and a pressure condition of 3 Mpa to 5.5 Mpa for 7 seconds to 25 seconds.

According to an exemplary embodiment of the present invention, the press unit may include a pair of pressing blocks, in which the pair of pressing blocks moves in a direction facing each other to surface-press the stacked material stacked on the table.

According to an exemplary embodiment of the present invention, the separator supplier may have a passage formed therein through which the separator passes, and may further include a separator heating unit configured to heat the separator passing through the passage.

In the apparatus for manufacturing the electrode assembly according to an exemplary embodiment of the present invention, the first electrode stacking unit may further include a first moving unit configured to move the first suction head to the stack table and provide a pressing force for the first suction head to stack and press the first electrode on the stack table. The second electrode stacking unit may further include a second moving unit configured to move the second suction head to the stack table and provide a pressing force for the second suction head to stack and press the second electrode on the stack table. In this case, a stacking may be referred to as a loading.

In the apparatus for manufacturing the electrode assembly according to an exemplary embodiment of the present invention, the first electrode stacking unit may include the first suction head configured to vacuum suction and hold the first electrode, and may further include the first moving unit configured to load and press the first electrode onto the stack table as the first suction head approaches the stack table. The second electrode stacking unit may include the second suction head configured to vacuum suction and hold the second electrode, and may further include the second moving unit configured to load and press the second electrode onto the stack table as the second suction head approaches the stack table.

Further, the apparatus for manufacturing the electrode assembly according to an exemplary embodiment of the present invention may further include a rotating unit configured to rotate the stack table. The first electrode stacking unit may be provided on one side of the rotating unit, and the second electrode stacking unit may be provided on the other side of the rotating unit. The rotating unit may rotate the stack table to one side to face the first suction head when stacking the first electrode, and may rotate the stack table to the other side to face the second suction head when stacking the second electrode. The rotating unit may adjust a position so that the suction head and the stack table face each other, and the electrode may be stacked on the stack table.

In addition, according to an exemplary embodiment, the apparatus may include a holding device configured to grip the first electrode or the second electrode when the first electrode or the second electrode is stacked on the stack table and to fix the first electrode or the second electrode to the stack table. The holding device may prevent the electrode assembly from being twisted.

According to an exemplary embodiment, the holding device may grip and fix an upper surface of the second electrode stacked on the highest side of the stack table when the first electrode is stacked on the stack table, and may grip and fix an upper surface of the first electrode stacked on the highest side of the stack table when the second electrode is stacked on the stack table.

More specifically, the holding device according to an exemplary embodiment of the present invention may press and fix the upper surface of the second electrode stacked on the highest side of the stack table when the first electrode is stacked on the stack table, and may press and fix the upper surface of the second electrode stacked on the highest side of the stack table when the second electrode is stacked on the stack table. That is, the gripping of the first electrode and the second electrode may be performed in a manner of pressing the upper surface of the electrode and the second electrode.

According to an exemplary embodiment of the present invention, the first electrode stacking unit may be disposed on one side of the stack table, and the second electrode stacking unit may be disposed on the other side of the stack table. The apparatus may further include a driving unit configured to drive the stack table so that a surface of the stack table faces the first electrode stacking unit or the second electrode stacking unit. The driving unit may move the stack table so that the surface of the stack table faces the first suction head when the first electrode is loaded onto the stack table, and may move the stack table so that the surface of the stack table faces the second suction head when the second electrode is loaded onto the stack table. The driving unit may be the rotating unit that allows the stack table to be moved in a seesaw motion.

That is, in the apparatus for manufacturing the electrode assembly according to an exemplary embodiment of the present invention, the rotating unit may rotate the stack table alternately in a direction toward the first electrode stacking unit and in a direction toward the second electrode stacking unit, in order to enable the separator to be folded in a zigzag manner such that the separator is positioned between the first electrode and the second electrode.

In order to stack the first electrode, the separator, and the second electrode in a form in which the first electrode and the second electrode are alternately disposed between the folded separator, a method in which the stack table moves in the leftward and rightward direction, a method in which the separator moves in the leftward and rightward direction, or a method in which the stacking table rotates may be used, and the ordinary skill in the art may be applied thereto. However, in the present specification, a method utilizing the rotating unit is illustrated in the drawings as an example.

An exemplary embodiment of the present invention provides a method of manufacturing an electrode assembly including a first electrode, a separator, and a second electrode, the method including: supplying the separator to a stack table and stacking the separator while heating the separator; heating the first electrode with a non-contact heater configured to heat an object to be heated while being not in physical direct contact with the object to be heated, and supplying the first electrode to the stack table and stacking the first electrode; and heating the second electrode with the non-contact heater configured to heat an object to be heated without physically coming in direct contact with the object to be heated, and supplying the second electrode to the stack table and stacking the second electrode. The stacked material includes the first electrode, the separator, and the second electrode placed on the stack table. In the method of manufacturing the electrode assembly, the electrode assembly may be in a form in which the separator is folded in a zigzag shape, and the first electrode and the second electrode are alternately disposed between the folded separator.

That is, the electrode assembly, in the method of manufacturing the electrode assembly according to an exemplary embodiment of the present invention, may be stacked in a form such that the separator is folded and stacked in a zigzag manner, and the first electrode and the second electrode are alternately stacked between successive layers of the stacked separator.

The description of the apparatus for manufacturing the electrode assembly may be applied to the description of the non-contact heater.

As described above, when the first suction head and the second suction head each include the non-contact heater, an exemplary embodiment of the present invention provides a method of manufacturing the electrode assembly. The method includes: heating and supplying the first electrode to the stack table; heating and supplying the second electrode to the stack table; heating and supplying the separator to the stack table; and manufacturing a stacked material by stacking the first electrode, the separator, and the second electrode on the stack table in a form in which the first electrode and the second electrode are alternately disposed between the separator being folded. In the heating and supplying of the first electrode to the stack table and the heating and supplying of the second electrode to the stack table, the first electrode is supplied by the first suction head that vacuum suction the first electrode and the second electrode is supplied by the second suction head that vacuum suction the second electrode, and the first electrode and the second electrode are heated by the non-contact heater included in the first suction head and the second suction head, respectively.

Even in the method of manufacturing the electrode assembly of the present invention, the non-contact heater may be a heater that transmits heat by radiation. In a specific example, the non-contact heater may be a non-contact infrared heater (IR heater) as described above in connection with the apparatus.

The description of the apparatus for manufacturing the electrode assembly of the present invention may be applied to the method of manufacturing the electrode assembly of the present invention.

In the method of manufacturing the electrode assembly, the steps of heating the first electrode with the non-contact heater that heats an object to be heated without physically coming in direct contact with the object to be heated, and supplying the first electrode to the stack table may include: measuring a surface temperature of the first electrode; and adjusting the surface temperature of the first electrode to a controlled temperature range by adjusting a heating temperature of the non-contact heater based on the measured temperature. The steps of heating the second electrode with the non-contact heater that heats an object to be heated without physically coming in direct contact with the object to be heated, and supplying the second electrode to the stack table may include: measuring a surface temperature of the second electrode; and adjusting the surface temperature of the second electrode to the controlled temperature range by adjusting the heating temperature of the non-contact heater based on the measured temperature.

In the method of manufacturing the electrode assembly of the present invention, the steps of heating and supplying the first electrode to the stack table and heating and supplying the second electrode to the stack table may include: measuring the surface temperature of the first electrode and the second electrode; and adjusting the heating temperature of the non-contact heater based on the measured temperature to adjust the surface temperature of the first electrode and the second electrode to a controlled temperature range. The controlled temperature range may be from 50°C to 140°C, preferably from 60°C to 120°C. As described above, maintaining a controlled temperature in such range has the advantage of relatively easy adhesion without deformation of the structure in the process of pressing the electrode to adhere to the separator. When temperature is lower than the temperature described above, the adhesion of the electrode and separator may be weakened, resulting in a separation of the cell assembly and lower productivity. When temperature is higher than the temperature described above, the separator ventilation may become too large, resulting in poor product performance.

The method of manufacturing the electrode assembly may further include: stopping an operation of the non-contact heater when the surface temperature of the first electrode and the second electrode is adjusted to the controlled temperature range. That is, the electrode may be heated only when necessary to prevent deformation of the electrode assembly structure or damage to the electrode. This may be possible because the non-contact heater is used, which may heat up quickly and is easy to stop operating when needed.

The method of manufacturing the electrode assembly of the present invention may further include a heat pressing step to heat and press the stacked material. The description above may be applied to a description of the heat pressing step.

The method of manufacturing the electrode assembly of the present invention may further include: stacking the first electrode on the stack table and heating and pressing the first electrode to adhere the first electrode and the separator; and stacking the first electrode on the stack table and heating and pressing to adhere the first electrode and the separator. Conditions in the stacking of the first electrode on the stack table and the heating and pressing of the first electrode may be as described above.

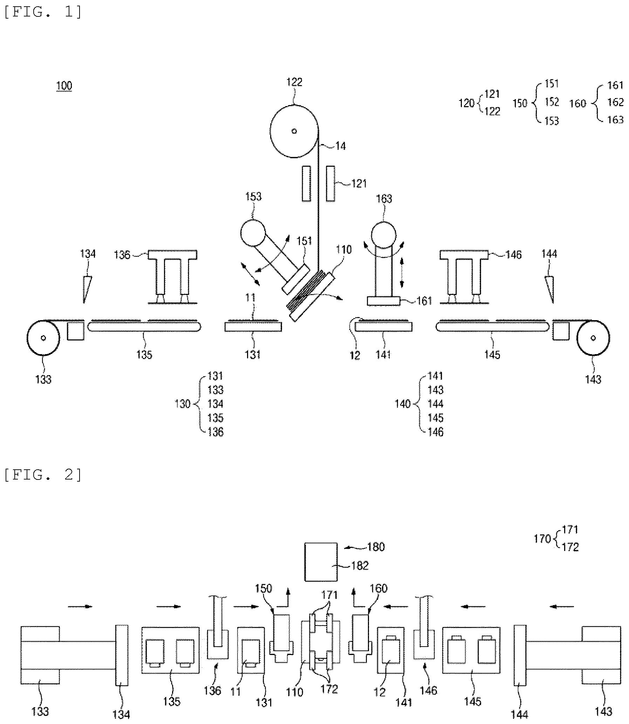

Hereinafter, with reference to FIGS. 1 to 15, the apparatus for manufacturing the electrode assembly and the method of manufacturing the electrode assembly, which are exemplary embodiments of the present invention, will be described in more detail.

FIG. 1 is a top plan view exemplarily illustrating the apparatus for manufacturing the electrode assembly according to an exemplary embodiment of the present invention, and FIG. 2 is a front view illustrating a concept of the apparatus for manufacturing the electrode assembly according to an exemplary embodiment of the present invention. For convenience, the holding device 170 illustrated in FIG. 2 is omitted from FIG. 1. In addition, in FIG. 1, a press unit 180 is omitted. A configuration, in which a first electrode stacking unit 150 and a second electrode stacking unit 160 heat and press a first electrode 10 and a second electrode 11, respectively while stacking the first and second electrodes on a stack table 110, is represented. As described above, the press unit 180 may be further included, or the apparatus may have a configuration in which the press unit 180 heats and presses the first electrode 10 and the second electrode 11 while the configuration, in which the first electrode stacking unit 150 and the second electrode stacking unit 160 stack the first electrode 10 and the second electrode 11, respectively, on the stack table 110 and heat and press the first electrode 10 and the second electrode 11, is omitted. In FIG. 2, a separator supplier 120 illustrated in FIG. 1 is omitted and the press unit 180 is illustrated.

With reference to FIGS. 1 and 2, the apparatus for manufacturing the electrode assembly 100 according to an exemplary embodiment of the present invention may includes: the stack table 110; a separator supplier 120 configured to heat and supply a separator 14; a first electrode supplier 130 configured to heat and supply the first electrode 11; and a second electrode supplier 140 configured to heat and supply the second electrode 12. The first electrode stacking unit 150 is configured to stack the first electrode 11 on the stack table 110; the second electrode stacking unit 160 configured to stack the second electrode 12 on the stack table 110; and the press unit 180 is configured to adhere the first electrode 11, the separator 14, and the second electrode 12. In addition, the apparatus 100 for manufacturing the electrode assembly according to an exemplary embodiment of the present invention may further include a holding device 170 configured to hold the first electrode 11 and the second electrode 12 when the first electrode 11 and the second electrode 12 are stacked on the stack table 110. Additionally, the apparatus may have a configuration in which each of the first electrode stacking unit 150 and the second electrode stacking unit 160 stacks, heats, and presses the first electrode 10 and the second electrode 11, respectively, on the stack table 110.

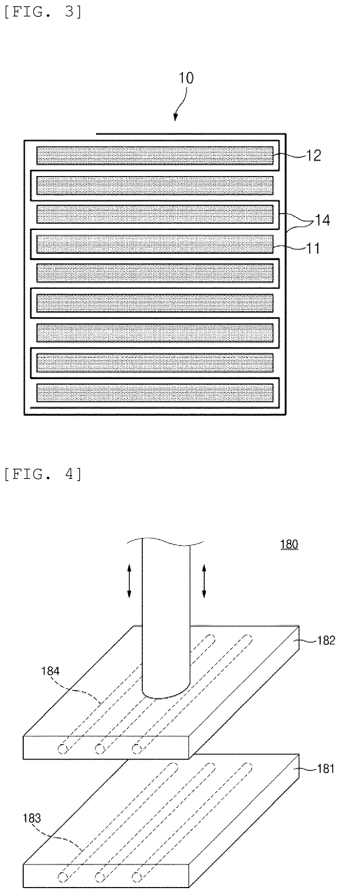

FIG. 3 is a cross-sectional view illustrating the electrode assembly manufactured by the apparatus for manufacturing the electrode assembly or the method of manufacturing the electrode assembly according to an exemplary embodiment of the present invention.

With reference to FIGS. 1 to 3, the apparatus 100 of manufacturing the electrode assembly according to an exemplary embodiment of the present invention is an apparatus that manufactures the electrode assembly 10 by stacking the first electrode 11, the separator 14, and the second electrode 12.

The electrode assembly 10 is a power generator capable of charging and discharging, and may be in a form such that the first electrode 11, the separator 14, and the second electrode 12 are alternatively stacked and aggregated. Here, the electrode assembly 10 may be in a form of, for example, the separator 14 folded in a zigzag manner and the first electrode 11 and the second electrode 12 being alternately disposed between the folded separator 14. In this case, the electrode assembly 10 may be provided in a form in which the separator 14 surrounds an outermost portion thereof.

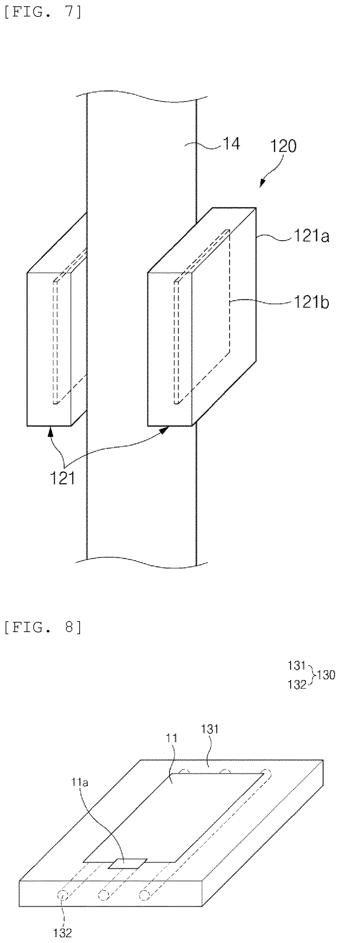

FIG. 7 is a perspective view illustrating a separator supplier of the apparatus for manufacturing the electrode assembly in accordance with an exemplary embodiment of the present invention.

With reference to FIGS. 1 and 7, the separator supplier 120 may heat the separator 14 and supply the separator 14 to the stack table 110. In addition, the separator suppliers 120 may include a passage formed therein through which the separator 14 passes, as well as a separator heating unit 121 that heats the separator 14 that passes through the passage.

The separator heating unit 121 may include a pair of bodies 121a and a separator heater 121b that heats the bodies 121a. The pair of bodies 121a may be spaced apart from each other by a predetermined distance to allow the separator 14 to pass through. Here, the separator 14 may be heated in a non-contact manner, for example, by passing through the separator supplier without contacting the separator heating unit 121. Meanwhile, the body 121a may be formed in the form of a rectangular block, for example.

The separator supplier 120 may further include a separator roll 122 on which the separator 14 is wound. Here, the separator 14 wound on the separator roll 122 is gradually unwound, passes through the separator heating unit 121, and may be supplied to the stack table 110.

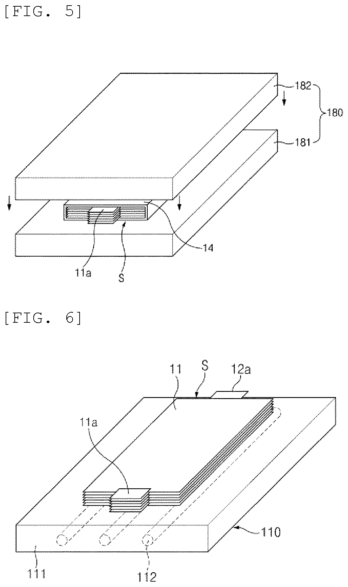

FIG. 4 is a perspective view illustrating the press unit in the apparatus for manufacturing the electrode assembly according to an exemplary embodiment of the present invention, and FIG. 5 is a perspective view exemplarily illustrating a state in which the press unit presses a stacked material in the apparatus for manufacturing the electrode assembly according to an exemplary embodiment of the present invention.

Referring to FIGS. 3 to 5, the press unit 180 may press the first electrode 11, separator 14, and second electrode 12 that are heated and stacked so as to adhere the first electrode 11, separator 14, and second electrode 12.

In addition, the press unit 180 may include a pair of pressing blocks 181 and 182, in which the pair of pressing blocks 181 and 182 are moved in a direction facing each other and may surface-press the stacked material S of the stacked first electrode 11, the separator 14, and the second electrode 12.

When the separator 14 surrounds an outer surface of the stacked material S, adhesion may also occur between an outer portion of the separator 14 positioned at the outermost portion of the stacked material S and an inner portion of the first and second electrodes 11 and 12 and the separator 14 that face the outer portion of the separator 14. Therefore, when the first electrode 11, the separator 14, and the second electrode 12 are stacked to form the electrode assembly 10, it is possible to more effectively prevent the first and second electrodes 11 and 12 and the separator 14 from moving out of position and becoming unstacked.

The press unit 180 may further include press heaters 183 and 184 that heat the pair of pressing blocks 181 and 182, such that the pair of pressing blocks 181 and 182 heat and press the stacked material S of the first electrode 11, the separator 14, and the second electrode 12. Accordingly, when the stacked material S is pressed with the press unit 180, thermal fusion between the first electrode 11, the separator 14, and the second electrode 12 may be better achieved, resulting in more robust adhesion.

The pair of pressing blocks 181 and 182 may have a pressing surface formed as a plane, and the horizontal and vertical lengths of the pressing surface may be longer than the horizontal and vertical lengths of the stacked material S on which the first electrode 11, the separator 14, and the second electrode 12 are stacked.

The pair of pressing blocks 181 and 182 may include a first pressing block 181 and a second pressing block 182, and the first pressing block 181 and the second pressing block 182 may be configured as rectangular blocks in a cuboidal shape.

FIG. 6 is a perspective view illustrating the stack table in the apparatus for manufacturing the electrode assembly according to an exemplary embodiment of the present invention.

With reference to FIGS. 2 and 6, the first electrode 11, the separator 14, and the second electrode 12 may be stacked on the stack table 110 such that the first electrode 11 and the second electrode 12 are alternately disposed between the folded separator 14.

In addition, the stack table 110 may include a table body 111 on which the first electrode 11, the separator 14, and the second electrode 12 are stacked, and a stack table heater 112 that heats the table body 111 to heat the stacked material S being stacked.

The first electrode 11 may be configured as a positive electrode and the second electrode 12 may be configured as a negative electrode cathode, but the invention is not necessarily limited thereto. For example, the first electrode 11 may be configured as a negative electrode and the second electrode 12 may be configured as a positive electrode.

FIG. 8 is a perspective view illustrating a first electrode resting table in the apparatus for manufacturing the electrode assembly, according to an exemplary embodiment of the present invention.

With reference to FIGS. 2 and 8, the first electrode supplier 130 may heat the first electrode 11 and supply the first electrode 11 to the first electrode stacking unit 150.

In addition, the first electrode supplier 130 may include a first electrode resting table 131 on which the first electrode 11 rests before being stacked on the stack table 110 by the first electrode stacking unit 150, and a first electrode heater 132 configured to heat the first electrode resting table 131 to heat the first electrode 11.

Meanwhile, the first electrode supplier 130 may further include: a first electrode roll 133 on which the first electrode 11 is wound in the form of a sheet; a first cutter 134 that cuts the first electrode 11 in the form of a sheet wound on the first electrode roll 133 at predetermined intervals to form the first electrode 11 having a predetermined size as the first electrode 11 is unwound and supplied; a first conveyor belt 135 that moves the first electrode 11 cut by a first cutter 134; and a first electrode supply head 136 that vacuum suctions the first electrode 11 transported by a first conveyor belt 135 and rests the first electrode on the first electrode resting table 131. Here, the first cutter 134 may cut the sheet-shaped first electrode 11 such that a first electrode tab 11a protrudes from an end of the first electrode 11 when the first electrode 11 is cut.

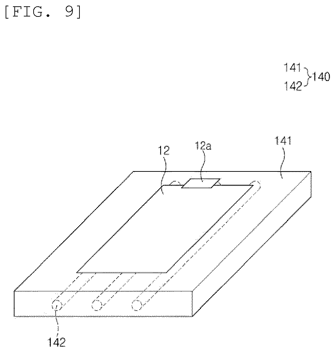

FIG. 9 is a perspective view illustrating a second electrode resting table in the apparatus of manufacturing the electrode assembly, according to an exemplary embodiment of the present invention.

With reference to FIGS. 2 and 9, the second electrode supplier 140 may heat the second electrode 12 and supply the second electrode 12 to the second electrode stacking unit 160.

In addition, the second electrode supplier 140 may include a second electrode resting table 141 on which the second electrode 12 rests before being stacked on the stack table 110 by the second electrode stacking unit 160, and a second electrode heater 142 configured to heat the second electrode resting table 141 to heat the second electrode 12.

Meanwhile, the second electrode supplier 140 may further include: a second electrode roll 143 on which the second electrode 12 is wound in the form of a sheet; a second cutter 144 that cuts the second electrode 12 in the form of a sheet wound on the second electrode roll 143 at predetermined intervals to form the second electrode 12 having a predetermined size as the second electrode 12 is unwound and supplied; a second conveyor belt 145 that moves the second electrode 12 cut by a second cutter 144; and a second electrode supply head 146 that vacuum suctions the second electrode 12 transported by a second conveyor belt 145 and rests the second electrode on the second electrode resting table 141. Here, the second cutter 144 may cut the sheet-shaped second electrode 12 such that a second electrode tab 12a protrudes from an end of the second electrode 12 when the second electrode 12 is cut.

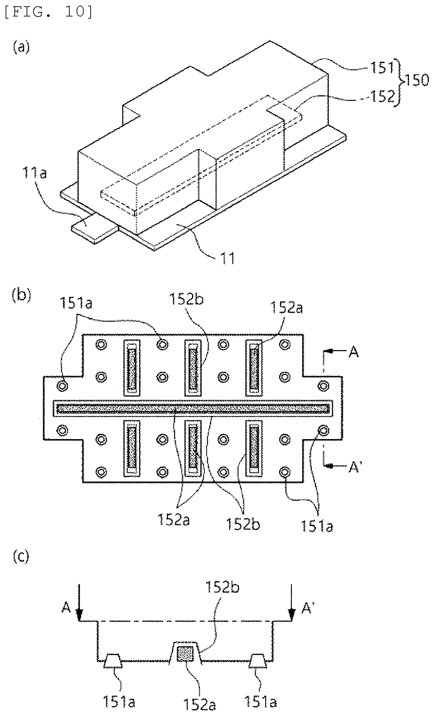

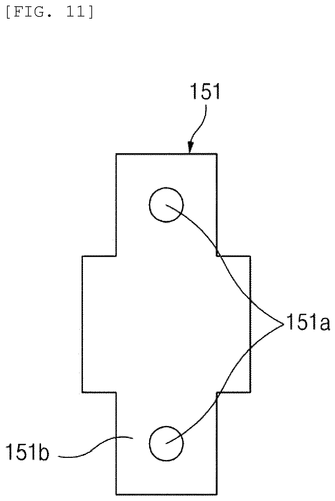

FIG. 10 is a perspective view illustrating a first suction head in the apparatus for manufacturing the electrode assembly, according to an exemplary embodiment of the present invention, and FIG. 11 is a bottom plan view illustrating the first suction head in the apparatus for manufacturing the electrode assembly, according to an exemplary embodiment of the present invention.

With reference to FIGS. 2, 10, and 11, the first electrode stacking unit 150 may stack the first electrode 11 on the stack table 110.

Further, the first electrode stacking unit 150 may include a first suction head 151, a first electrode non-contact heater 152, and a first moving unit 153.

The first suction head 151 may vacuum suction the first electrode 11 resting on the first electrode resting table 131. In this case, the first suction head 151 has a vacuum suction hole 151a formed on a bottom surface 151b thereof, so that the first electrode 11 may be suctioned through the vacuum suction hole 151a to fix the first electrode 11 to the bottom surface 151b of the first suction head 151. Here, the first suction head 151 may have a passage that connects the vacuum suction hole 151a and a vacuum suction device (not illustrated) formed therein.

Specifically, as illustrated in part (a) of FIG. 10, the first electrode non-contact heater 152 may individually heat the first electrode 11 without coming into physical contact with the first electrode 11 being suctioned by the first suction head 151. That is, each individual electrode may be heated individually, rather than indirectly by heating the resting table, etc. with the heater. In part (a) of FIG. 10, a position of the first electrode non-contact heater 152 is illustrated approximately, and specifically. The first electrode non-contact heater 152 includes a lamp 152a and a reflector 152b, as illustrated in part (b) and (c) of FIGS. 10, and is positioned on a bottom surface 151b of the first suction head 151. The bottom surface 151b means an area in which the vacuum suction hole 151a is not formed, when a surface in contact with the electrode is viewed from the first suction head 151. That is, positioning the first electrode non-contact heater 152 on the bottom surface 151b of the first suction head 151 means that the first electrode non-contact heater 152 is disposed in such a form that there is no area where the first electrode non-contact heater 152 overlaps in position with the vacuum suction hole 151a of the first suction head 151.

As illustrated in FIG. 10, the arrangements of the non-contact heaters shown are some of the optimal arrangements for uniformly heating the electrodes with the non-contact heater, but the invention is not limited thereto. The arrangement of the non-contact heater may be partially changed so that the optimal arrangement for uniformly heating the electrodes of the apparatus is achieved in consideration of the size of the electrodes and the like.

Part (b) of FIG. 10 is a top plan view of the bottom surface 151b of the first suction head 151, and as described above, for the apparatus for manufacturing the electrode assembly according to the present application. The first electrode non-contact heater 152 is installed in a position that does not overlap with the vacuum inlet hole 151a, as illustrated in part (b) of FIG. 10. Part (c) of FIG. 10 is a cross-sectional view of the bottom surface 151b of the first suction head 151 in the direction A-A' of part (b) of FIG. 10. That is, as illustrated in part (c) of FIG. 10, the first electrode non-contact heater 152 includes a lamp 152a and a reflector 152b, and is installed in a position that does not overlap with the vacuum suction hole 151a. In this first electrode non-contact heater 152, whether the heater is operational and heating temperature of the heater may be adjusted by temperature of the first electrode measured by a temperature sensor (not illustrated).

More specifically, as illustrated in part (b) of FIG. 10, a groove may be formed in the form of a concave shape between the vacuum suction holes 151a, in which the lamp 152a of the first electrode non-contact heater 152 may be disposed in the groove. In addition, a recessed housing is also formed (not illustrated) to protect the lamp 152a. In this case, although not illustrated in part (b) of FIG. 10, a holder may be formed for fixing the lamp 152a in the groove, in which the groove is formed with a depth such that, taking into account a size of the lamp 152a, the lamp 152a does not directly touch the first electrode even when the lamp 152a is fixed to the groove. The first electrode may be heated by heat generated from the lamp 152a using the reflector 152b with as little loss as possible. In addition, the same description may apply to a second electrode non-contact heater that heats the second electrode.

In addition, FIG. 10 illustrates a case in which the first electrode stacking unit 150 includes a first electrode non-contact heater 152, more specifically a case in which the first electrode non-contact heater 152 is included in a position of the first suction head 151, but this corresponds to only one example, and the non-contact heater may be disposed on the first electrode resting table 131 in the form illustrated in FIG. 10, as described above.

In this case, the first electrode resting table may also have a groove formed therein in a concave form and a holder may be formed therein to fix the lamp of the non-contact heater to the groove. The groove has such a depth that the lamp does not come into direct contact with the first electrode even when the lamp is fixed to the groove, taking into account a size of the lamp. The description of the first electrode resting table described above may also be applied to the second electrode resting table.

The first moving unit 153 may move the first suction head 151 to the stacking table 110 so that the first electrode 11 resting on the first electrode resting table 131 may be stacked on the stacking table 110 by the first suction head 151.

With reference to FIG. 2, the second electrode stacking unit 160 may stack the second electrode 12 on the stack table 110. The second electrode stacking unit 160 may be configured with the same structure as the first electrode stacking unit 150 described above. In this case, the second electrode stacking unit 160 may include a second suction head 161, a second electrode non-contact heater (not illustrated), and a second moving unit 163.

As a more specific example, when the non-contact heater is a non-contact infrared heater, the non-contact heater may include an infrared lamp and a reflector. Further, a groove may be formed such that an infrared lamp is disposed within the groove.

According to an exemplary embodiment of the present invention, the second suction head 161 may vacuum suction the second electrode 12 resting on the second electrode resting table 141.

According to an exemplary embodiment of the present invention, the second electrode non-contact heater may individually heat the second electrode 12 without coming into physical contact with the second electrode 12 being suctioned by the second suction head 161. The above description of the first electrode non-contact heater may be applied to a type, disposition, and structure of the second electrode non-contact heater.

The second moving unit 163 may move the second suction head 161 to the stacking table 110 so that the second electrode 12 resting on the first electrode resting table 141 may be stacked on the stacking table 110 by the second suction head 161.

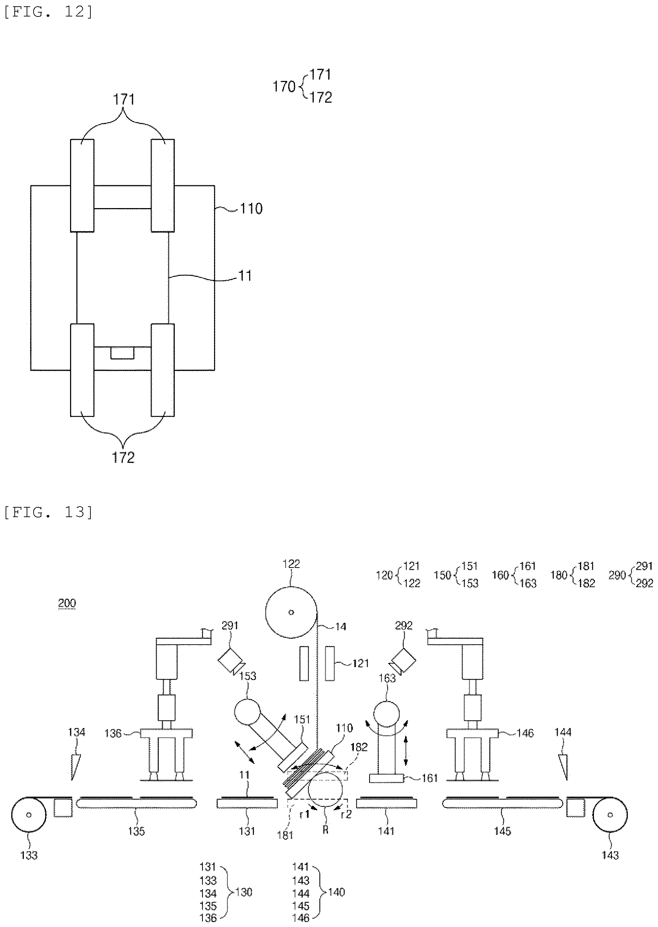

FIG. 12 is a top plan view illustrating the holding device and a stack table in the apparatus of manufacturing the electrode assembly, according to an exemplary embodiment of the present invention.

With reference to FIGS. 1 and 12, the holding device 170 may grip the first electrode 11 or the second electrode 12 and fix the first electrode 11 or the second electrode 12 to the stack table 110 when the first electrode 11 or the second electrode 12 is stacked on the stack table 110.

Further, the holding device 170 may press and fix the upper surface of the first electrode 11 stacked on the highest side of the stack on the stack table 110 when stacking the first electrode 11 on the stack table 110, and may press and fix the upper surface of the second electrode 12 stacked on the highest side of stack on the the stack table 110 when stacking the second electrode 12 on the stack table 110.

That is, when the first electrode 11 and the second electrode 12 are positioned and stacked between the separator 14 to form the stacked material, the holding device 170 may grip a surface positioned on the highest side of the stacked material in a manner that presses the surface in a direction toward the stack table 110 to prevent the stacked material from being moved away from the stack table 110.

The holding device 170 may include, for example, a first holding device 171 and a second holding device 172 to hold both sides of the first electrode 11 or both sides of the second electrode 12.

Further, for example, when the stack table 110 is rotated after the holding device 170 grips the first electrode 11 or the second electrode 12, the separator 14 may be unwound from the separator roll 122 in proportion to the amount of rotation of the stack table 110 and supplied to the stack table 110.

The holding device 170 and the stack table 110 may be connected or coupled to a rotating device (not illustrated). In this case, the rotating device may be configured as, for example, a mandrel. Here, when the holding device 170 grips the first electrode 11 or the second electrode 12, the rotating device may rotate the holding device 170 and the stack table 110.

With reference to FIGS. 1 to 3, regarding an operation of the apparatus 100 for manufacturing the electrode assembly according to an exemplary embodiment of the present invention, the separator 14 wound on the separator roll 122 is passed through the separator heating unit 121 and supplied. That is, the separator 14 is heated in the process of passing through the separator heating unit 121, and the heated separator 14 is supplied to the stack table 110. The separator 14 supplied as described above is stacked on the stack table 110, and the separator 14 is heated by the heated stack table 110.

Further, when the first electrode 11 is heated and supplied to the first electrode stacking unit 150 from the first electrode supplier 130, the first electrode stacking unit 150 heats and stacks the first electrode 11 on the upper surface of the separator 14 stacked on the stack table 110.

The holding device 170 presses the upper surface of the first electrode 11 and fixes the first electrode 11 to prevent the first electrode 11 from moving away from the stack table 110.

Then, when the stack table 110 is rotated in a direction toward the second electrode stacking unit 160, the separator 14 is continuously supplied and covers the upper surface of the first electrode 11.

Further, the second electrode stacking unit 160 stacks the second electrode 12, which is heated and supplied from the second electrode supplier 140, on a portion of the separator 14 covering the upper surface of the first electrode 11. Here, the second suction head 161 presses and heats the second electrode 12 in the second electrode stacking unit 160 to continuously heat the second electrode 12.

The holding device 170, which is pressing the upper surface of the first electrode 11, moves away from the pressing area and presses the upper surface of the second electrode 12 so that the stacked material including the second electrode 12 does not move away from the stack table 110.

Then, the process of stacking the first electrode 11 and the second electrode 12 is repeated, and the separator 14 is folded in a zigzag manner to form the stacked material in which the separator 14 is positioned between the first electrode 11 and the second electrode 12.

Further, the stacked material is moved to the press unit 180, and the press unit 180 heats and presses the stacked material to adhere the first electrode 11, the separator 14, and the second electrode 12 that are heated to manufacture the electrode assembly 10. In this case, the heated first electrode 11, separator 14, and second electrode 12 are heated and pressed by the press unit 180 and may be thermally fused.

The apparatus 100 for manufacturing the electrode assembly according to an exemplary embodiment of the present invention, configured as described above, may prevent the electrode assembly 10 from unfolding, and may prevent the first electrode 11, the separator 14, and the second electrode 12 from being misaligned in their stacked positions in the electrode assembly 10, due to the heating and stacking of the first electrode 11, the separator 14, and the second electrode 12, and due to the heating and pressing with the press unit 180 to adhere the first electrode 11, the separator 14, and the second electrode 12.

The apparatus for manufacturing the electrode assembly according to another exemplary embodiment of the present invention, may further include a vision device that inspects the first electrode or the second electrode. FIG. 13 is a front view illustrating a concept of the apparatus for manufacturing the electrode assembly further including the vision device.

In FIG. 13, the holding device is conveniently omitted, and the press unit 180, which is positioned at a rear side in the top plan view, is illustrated by a dotted line. In addition, the first electrode non-contact heater 152 and the second electrode non-contact heater 162 are omitted from FIG. 13 for convenience.

With reference to FIG. 13, an apparatus 200 for manufacturing an electrode assembly may include: the, stack table 110; the separator supplier 120 configured to supply the separator 14, and the separator 14; the first electrode supplier 130 configured to supply the first electrode 11; the second electrode supplier 140 configured to supply the second electrode 12; the first electrode stacking unit 150 configured to stack the first electrode 11 onto the stack table 110; the second electrode stacking unit 160 configured to stack the second electrode 12 onto the stack table 110; the press unit 180 configured to adhere the first electrode 11, the separator 14, and the second electrode 12; and the holding device 170 configured to fix the first electrode 11 and the second electrode 12 when the first electrode 11 and the second electrode 12 are stacked on the stack table 110 (see FIG. 12), and the apparatus 200 may further include a rotating unit R configured to rotate the stack table 110 and a vision device 290 configured to provide a vision inspection of the first and second electrodes.

The apparatus 200 for manufacturing the electrode assembly in FIG. 13 differs from the apparatus 100 for manufacturing the electrode assembly according to an exemplary embodiment described above in that the apparatus 200 further includes the rotating unit R and the vision device 290.

More specifically, in the apparatus 200 for manufacturing the electrode assembly according to another exemplary embodiment of the present invention, the vision device 290 may include a first camera 291 and a second camera 292.

The first camera 291 may photograph the first electrode 11 resting on the first electrode resting table 131 in the first electrode supplier 130, and the second camera 292 may photograph the second electrode 12 resting on the second electrode resting table 141 in the second electrode supplier 140.

Image information obtained by photographing with the first camera 291 and the second camera 292 may be used to inspect stacking quality of the first electrode 11 and the second electrode 12. In this case, a resting position, size, stacking status, etc. of the first electrode 11 and the second electrode 12 may be inspected.

The rotating unit R may rotate the stack table 110 in one direction r1 and the other direction r2. Here, the first electrode stacking unit 150 may be provided on one side of the rotating unit R, and the first electrode stacking unit 150 may be provided on the other side of the rotating unit R.

Further, the rotating unit R may rotate the stack table 110 to one side to face the first suction head 151 when the first electrode 11 is stacked, and rotate the stack table 110 to the other side to face the second suction head 161 when the second electrode 12 is stacked.

The rotating unit R may rotate the stacking table 110 alternately in a direction toward the first electrode stacking unit 150 and in a direction toward the second electrode stacking unit 160, such that the separator 14 may be folded in a zigzag manner in which the separator 14 is positioned between the first electrode 11 and the second electrode 12.

Hereinafter, an operation of the apparatus 200 for manufacturing the electrode assembly according to another exemplary embodiment of the present invention will be described.

With reference to FIGS. 1 and 13, the separator 14, wound on the separator roll 122, passes through the separator heating unit 121 and is supplied to the stack table 110. That is, the separator 14 is heated in the process of passing through the separator heating unit 121, and the heated separator 14 is supplied to the stack table 110. The separator 14 supplied as described above is stacked on the stack table 110, and the separator 14 is heated by the heated stack table 110.

When the first electrode 11 is supplied and rested on the first electrode resting table 131 of the first electrode supplier 130, the vision device 290 inspects stacking quality of the first electrode 11. In this case, the first electrode 11 is heated through the first electrode resting table 131, which is heated by the first electrode heater 132.

Further, when the heated first electrode 11 is supplied to the first electrode stacking unit 150, the first electrode stacking unit 150 stacks the first electrode 11 on the upper surface of the separator 14 stacked on the stack table 110.

The holding device 170 presses the upper surface of the first electrode 11 and fixes the first electrode 11 to prevent the first electrode 11 from moving away from the stack table 110. Then, when the stack table 110 is rotated in a direction toward the second electrode stacking unit 160 by the rotating unit R, the separator 14 is continuously supplied and covers the upper surface of the first electrode 11.

When the second electrode 12 is supplied and rested on the second resting table 141 of the second electrode supplier 140, the vision device 290 inspects stacking quality of the second electrode 12. In this case, the second electrode 12 is heated through the second electrode resting table 141, which is heated by the second electrode heater.

Further, when the heated second electrode 12 is supplied to the second electrode stacking unit 160, the second electrode stacking unit 160 stacks the second electrode 12 on the upper surface of the separator 14 stacked on the stack table 110.

The holding device 170, which is pressing the upper surface of the first electrode 11, moves away from the pressing area and presses the upper surface of the second electrode 12 so that the stacked material including the second electrode 12 does not move away from the stack table 110.

Then, the process of stacking the first electrode 11 and the second electrode 12 is repeated while the stack table is rotated, and thus the separator 14 is folded in a zigzag manner to form the stacked material in which the separator 14 is positioned between the first electrode 11 and the second electrode 12.

The stacked material is then moved to the press unit 180, and the press unit 180 heats and presses the stacked material to adhere the first electrode 11, the separator 14, and the second electrode 12 that are heated to manufacture the electrode assembly 10. In this case, the heated first electrode 11, separator 14, and second electrode 12 are heated and pressed by the press unit 180 and may be thermally fused (See FIG. 3).

In addition, in the case of FIG. 13, as described above, the first electrode stacking unit 150 may include the first suction head 151, the first electrode non-contact heater 152, and the first moving unit 153, and the second electrode stacking unit 160 may include the second suction head 161, the second electrode non-contact heater, and the second moving unit 163 (not illustrated), in which descriptions of the first suction head 151, the first electrode non-contact heater 152, and the first moving unit 153, the second suction head 161, the second electrode non-contact heater, and the second moving unit 163 are as described above.

In other words, the apparatus 200 for manufacturing the electrode assembly in FIG. 13 may have the same configuration when compared to the apparatus 100 for manufacturing the electrode assembly according to an exemplary embodiment described above, except that the apparatus 200 further includes the rotating unit R and the vision device 290.

Further, the press unit of the present invention will be described in detail with reference to FIG. 14. Specifically, part (a) of FIG. 14 is a perspective view illustrating a first press unit 50 according to an exemplary embodiment of the present invention, and part (b) of FIG. 14 is a perspective view illustrating a second press unit 60 according to an exemplary embodiment of the present invention.

With reference to part (a) of FIG. 14, the first press unit 50 may heat and press the stacked material S while fixing the stacked material S with a gripper 51. The first press unit 50 includes a pair of first pressing blocks 50a and 50b, and a pressing surface of the pair of first pressing blocks 50a and 50b is all planar except for a groove of the form corresponding to the fixing part 51b of the gripper 51.

The gripper 51 may include: a main body 51a provided corresponding to a length x and a height y of the stacked material S, or provided wider than the length x and the height y of the stacked material S; and a fixing part 51b provided at one surface of the main body 51a in the form of a plurality of columns or plates along a width z direction of the stacked material S. Here, the length x of the stacked material S may mean a portion of the stacked material S with the longest distance from one end of the stacked material S to the other end thereof, the height y may mean a distance in a stacking direction of the stacked material S, and the width z may mean a distance horizontally across the top surface of the stacked material S.

The fixing part 51b is adjustable in position along a height direction of the main body 51a, so that the fixing part 51b is in contact with the upper surface and the lower surface of the stacked material S, and may fix the stacked material S. Thereafter, the pair of first pressing blocks 50a and 50b included in the first press unit 50 moves in a direction towards one another and surface-presses at least one or more of the stacked material S and the gripper 51 to adhere the electrode and the separator included in the stacked material S.

With reference to part (b) of FIG. 14, the second press unit 60 may finally heat and press the stacked material S that has been primarily heated and pressed by the first press unit 50. The second press unit 60 includes a pair of second pressing blocks 60a and 60b, in which the pair of pressing blocks 61 and 62 move in a direction towards one another and may surface-press the stacked material S. In addition, the pair of second pressing blocks 60a and 60b included in the second press unit 60 may have pressing surfaces that are in contact with and press the stacked material S, all of which are planar.

An exemplary embodiment of the present invention provides an electrode assembly including: a first electrode; a separator; and a second electrode, in which the first electrode, the separator, and the second electrode are stacked along a stacking axis, and in which a thickness of the separator stacked in the middle of the electrode assembly is 1 to 1.09 times thicker than a thickness of the separator stacked at the outermost portion of the electrode assembly.

An exemplary embodiment of the present invention provides an electrode assembly manufactured by an apparatus for manufacturing an electrode assembly according to the present invention or a method of manufacturing an electrode assembly according to the present invention. In the electrode assembly manufactured by the apparatus for manufacturing the electrode assembly according to the present invention or the method of manufacturing the electrode assembly according to the present invention, the first electrode, the separator, and the second electrode are stacked along a stacking axis, in which a thickness of the separator stacked in the middle of the electrode assembly may be 1 to 1.09 times thicker than a thickness of the separator stacked at the outermost portion of the electrode assembly.

In the present specification, "outermost portion of the electrode assembly" means the uppermost position or the lowermost position in the stacking direction along the stacking axis of the stacked material being stacked.

In addition, in the present specification, the "middle of the electrode assembly" means a position corresponding to the middle between the uppermost position and the lowermost position in the stacking direction along the stacking axis of the stacked material being stacked. The stacking axis is as described above. That is, the stacked material (unfinished electrode assembly) and the stacking axis of the electrode assembly coincide.

In an exemplary embodiment of the present invention, a thickness of the separator located in the middle of the electrode assembly may be from 1 to 1.09 times the thickness of the separator located at the outermost portion of the electrode assembly, preferably more than 1 time and 1.09 times or less, more preferably more than 1 time and 1.05 times or less, and even more preferably more than 1 time and 1.03 times or less.

That is, in an exemplary embodiment of the present invention, the electrode assembly may be such that the thickness of the separator located at the outermost portion of the electrode assembly may be less than a thickness of the separator located in the middle of the electrode assembly, and the thickness of the separator located in the middle of the electrode assembly may be 1.09 times or less of the thickness of the separator located at the outermost portion of the electrode assembly.

An exemplary embodiment of the present invention provides an electrode assembly manufactured by an apparatus for manufacturing an electrode assembly according to the present invention or a method of manufacturing an electrode assembly according to the present invention. In the electrode assembly manufactured by the apparatus for manufacturing the electrode assembly according to the present invention or the method of manufacturing the electrode assembly according to the present invention, the electrode assembly may be such that the thickness of the separator located at the outermost portion of the electrode assembly may be less than a thickness of the separator located in the middle of the electrode assembly, and the thickness of the separator located in the middle of the electrode assembly may be 1.09 times or less of the thickness of the separator located at the outermost portion of the electrode assembly.

In an exemplary embodiment of the present invention, a deviation of the separator thickness of the electrode assembly may be 9 % or less, preferably 5 % or less, even more preferably 3 % or less. The electrode assembly according to the invention is manufactured by heating and pressing the stacked material (unfinished electrode assembly) in which the electrodes and separator are stacked. Since a thickness deviation of the outermost separator of the electrode assembly and the middle separator of the electrode assembly is the largest, the thicknesses of the outermost separator of the electrode assembly and the middle separator of the electrode assembly may be compared to determine whether the thickness deviation of the separator of the electrode assembly is included in the above numerical range.

Thus, the electrode assembly according to an exemplary embodiment of the present application has uniform performance and better withstanding voltage because the thickness of the separator is uniform.

In an exemplary embodiment of the present invention, the separator of the electrode assembly may be compressed compared to the separator supplied to manufacture the electrode assembly. That is, the separator supplied to manufacture the assembly may be compressed during the process of stacking the electrodes and separator to manufacture the electrode assembly and during the process of heating and pressing the stacked material of the electrodes and separator.

In an exemplary embodiment of the present invention, the separator of the electrode assembly may be compressed compared to the separator supplied to manufacture the electrode assembly, and a compression ratio of the separator located at the outermost portion of the electrode assembly may be 3% to 8%, preferably 4% to 8%.

In an exemplary embodiment of the present invention, the separator of the electrode assembly may be compressed compared to the separator supplied to manufacture the electrode assembly, and a compression ratio of the separator located in the middle of the electrode assembly may be 3% to 8%, preferably 4% to 8%.

In an exemplary embodiment of the present invention, the separator of the electrode assembly may be compressed compared to the separator supplied to manufacture the electrode assembly. A compression ratio of the separator located at the outermost portion of the electrode assembly may be 3% to 8%, preferably 4% to 8%, and a compression ratio of the separator located in the middle of the electrode assembly may be 3% to 8%, preferably 4% to 8%.

The compression ratio of the separator may be calculated from a difference between the thickness of the separator as supplied (raw material thickness, pre-process) and the thickness of the separator after completion of the electrode assembly (post-process).

In an exemplary embodiment of the present invention, the separator of the electrode assembly may be compressed compared to the separator supplied to manufacture the electrode assembly, and the compression ratio of the separator located at the outermost portion of the electrode assembly may be greater than the compression ratio of the separator located in the middle of the electrode assembly.

In an exemplary embodiment of the present invention, the separator of the electrode assembly may be compressed compared to the separator supplied to manufacture the electrode assembly, and the compression ratio of the separator located at the outermost portion of the electrode assembly is greater than the compression ratio of the separator located in the middle of the electrode assembly, and a difference in the compression ratios may be 3 %p (percentage point), preferably 2 %p, more preferably 1.5 %p.

Accordingly, a feature of the electrode assembly according to an exemplary embodiment of the present invention is that the separator is compressed in the process of heating and pressing the unfinished electrode assembly to increase the adhesion of the electrode and the separator. Another feature is that a difference in the compression ratios of the separator by heating and pressing is less depending on the stacking position of the separator in the electrode assembly. Thus, the electrode assembly according to the present invention has uniform performance and better withstanding voltage because the thickness of the separator is uniform.

In an exemplary embodiment of the present invention, the withstanding voltage of the electrode assembly may be 1.5 kv or more.

In addition, the description relating to the apparatus for manufacturing the electrode assembly according to the present invention and the configuration of the apparatus for manufacturing the electrode assembly may also be applied to the method of manufacturing according to the present invention and the electrode assembly manufactured by the method of manufacturing according to the present invention.

That is, the electrode assembly described above may be stacked in a form such that the separator is folded and stacked in a zigzag manner, and the first electrode and the second electrode are alternately and respectively stacked between the stacked separator.

### [Mode for Invention]

While exemplary embodiments of the present invention have been described in detail above, the scope of the present invention is not limited thereto, and it will be apparent to one of ordinary skill in the art that various modifications and variations are possible without departing from the technical spirit of the present invention as stated in the claims.

### <Manufacturing electrode assembly>

### 1) Example 1

Nineteen anodes, twenty cathodes, and the separator were supplied to the stack table from the anode supplier, the cathode supplier, and the separator supplier, respectively.

More specifically, the anode and the cathode were supplied by being cut from an anode sheet and a cathode sheet, respectively, and the separator was supplied in the form of a separator sheet. Thereafter, the stack table was rotated to fold the supplied separator while stacking the anode and the cathode on the separator.

The anode and the cathode were supplied using the electrode stacking unit including the suction head, the electrode non-contact heater, and the moving unit, respectively, and the electrode non-contact heater was used to heat the electrodes to satisfy the controlled temperature of Table 1 below (60°C in case of Example 1). That is, the electrodes were heated and supplied so that the surface temperature of the anode and cathode was 60°C.

In addition, a case in which the electrodes were supplied while being heated by the electrode non-contact heater is marked as 'O' at pre-heating application in Table 1 below.

At the same time, the stacking of the anode or the cathode stacked on the highest side of the stack table with the holding device was carried out, and as a result, the stacked material using 39 electrodes was manufactured by stacking on the stack table in the form in which the anode and the cathode were disposed alternately between the folded separator.

After manufacturing the stacked material, the first heat pressing step was performed, in which the stacked material was gripped with the gripper and pressed for 15 seconds while heating the stacked material with a temperature condition of 70°C and a pressure condition of 1.91 MPa.

After the first heat pressing step, the second heat pressing step was performed, in which the stack table was heated so that temperature was 70°C (a temperature condition), and a pressure of 2.71 Mpa (a pressure condition) was applied to the stacked material by the pressing block of the press unit for 10 seconds (pressing time). The result was the electrode assembly in Example 1.

In the process of manufacturing the electrode assembly, the above description of the present invention may be applied.

### 2) Examples 2 to 4, Comparative Examples 1 and 2

The electrode assemblies in Examples 2 to 4 and Comparative Examples 1 and 2 were manufactured by the same method as Example 1, except that the electrodes were heated and supplied to satisfy the controlled temperature in Table 1 below.

### 3) Comparative Example 3

The process of supplying the electrodes while heating the electrodes with the electrode non-contact heater was omitted, and the first heat pressing step in Example 1 was carried out by increasing to 30 seconds and the second heat pressing step in Example 1 was carried out by increasing to 30 seconds to increase adhesion stability of the electrodes and the separator, resulting in the electrode assembly in Example 3 being manufactured.

### <Experimental Example 1 - Evaluating separator adhesion stability>

Adhesion stability of the separator was evaluated by visually observing side surface portions of the electrode assemblies in Examples 1 to 4 and Comparative Examples 1 to 3.

Part (a) of FIG. 15 is a photographed image illustrating an electrode assembly according to Comparative Example 1, and part (b) of FIG. 15 is a photographed image illustrating an electrode assembly according to Example 1.

When it was observed that the electrode and the separator spread apart due to poor adhesion of the electrode and the separator, as illustrated in part (a) of FIG. 15 (in the region indicated by the dotted line circle), Table 1 below indicates that with an 'X' in the "separator adhesion stability" column. In contrast, when no separation between the electrode and the separator was observed (as shown in the dotted line circle of part (b) of FIG. 15), an 'O' is included in the "separator adhesion stability" column.

### <Experimental Example 2 - Evaluating separator ventilation>

The electrode assemblies in Examples 1 to 4 and Comparative Examples 1 to 3 were disassembled to collect separators corresponding to positions in the middle of the upper and lower ends of the electrode assembles based on the stacking direction of the electrode assembly, and then cut to prepare separator samples measuring 5 cm X 5 cm (horizontal by vertical). Thereafter, the separator samples were washed with an organic solvent.

Thereafter, the ventilation for Examples 1 to 4 and Comparative Examples 1 to 3 was measured by measuring the time taken for 100 ml (or 100 cc) of air to pass through a separator of 1 square inch using a Gurley type Densometer (No. 158) of Toyoseiki, in accordance with the Gurley measurement method of the Japanese Industrial Standard (JIS Gurley), under a condition that the separator is at room temperature and a pressure of 0.05 MPa.

The results are shown in Table 1 below.

**[Table 1]**

| | Pre-heating application | Controlled temperature (°C) | Separator adhesion stability | Separator ventilation (sec/100ml) |
|---|---|---|---|---|
| Example 1 | ○ | 60 | ○ | 97 |
| Example 2 | ○ | 80 | ○ | 100 |
| Example 3 | ○ | 100 | ○ | 103 |
| Example 4 | ○ | 120 | ○ | 107 |
| Comparative example 1 | ○ | 45 | X | 95 |
| Comparative Example 2 | ○ | 150 | ○ | 5940 |
| Comparative Example 3 | X | - | ○ | 98 |

As shown in Table 1, it was determined from the results of Comparative Example 1 that adhesion stability of the separator is poor in the case where the electrodes were heated individually, even when the surface temperature of the electrodes is below the controlled temperature range according to the present invention.

In addition, in Comparative Example 2, where the surface temperature of the electrode is above the controlled temperature range according to the present invention, there is no problem with adhesion stability of the separator, but performance of the electrode assembly may be degraded due to the excessively large value of 5940 sec/100ml of ventilation.

Comparative Example 3 may be similar to Example in terms of adhesion stability of the separator and ventilation of the separator, but it was determined that the heat pressing step needed to be carried out for a longer period of time than in Example. In terms of mass-producing the electrode assembly, the increased manufacturing time means that Examples 1 to 4 are advantageous over Comparative Example 3 in terms of process efficiency and cost.

### <Experimental Example 3 - Evaluating changes in separator raw material thickness and separator compression ratio>

Changes in a separator raw material thickness and a separator compression ratio were evaluated for the electrode assembly in Example 1 and Comparative Example 3.

Specifically, after measuring the separator raw material thickness before stacking, the electrode assemblies in Examples 1 and Comparative Example 3 were disassembled to collect the separators located at the upper ends (outermost) of the electrode assemblies and the separators corresponding to the intermediate positions (middle) of the upper and lower ends of the electrode assemblies based on the stacking direction of the electrode assemblies, and the changes in the separator raw material thickness before and after the process were measured, and the results are shown in Table 2 below. In addition, the separator compression ratios were calculated from values of change in the separator raw material thickness and shown in Table 2 below.

**[Table 2]**

| | | Separator raw material thickness (*µ*m) | | Separator compression ratio (%) | |
|---|---|---|---|---|---|
| | | Middle | Outermost | Middle | Outermost |
| Example 1 | Pre-process | 9.8 | | 6 | 7 |
| | Post-process | 9.3 | 9.2 | | |
| Comparative Example 3 | Pre-process | 9.8 | | 0 | 9 |
| | Post-process | 9.8 | 8.9 | | |

As shown in Table 2, when the electrodes were not heated individually, it was determined that variation of the raw material thickness of the separator was large, the raw material thickness of the separator in the outermost portion was reduced more than necessary, and the raw material thickness of the separator in the middle portion was almost not changed. That is, Comparative Example 3 may be similar to Example in terms of adhesion stability of the separator and ventilation of the separator, but the heat pressing step needs to be carried out for a longer period of time than in the Example, and unlike Example, it was determined that the separator thickness varied significantly depending on the position within the electrode assembly.

This means that it is difficult for the electrode assembly to have uniform performance regardless of the position of the electrode assembly. That is, it was confirmed that the electrode assembly manufactured by the apparatus and method for manufacturing the electrode assembly according to the present invention has uniform performance.

### <Experimental Example 4 - Evaluating withstanding voltage>

Withstanding voltages were evaluated for the electrode assemblies in Example 1 and Comparative Example 3. The results are shown in Table 3 below.

**[Table 3]**

| | Withstanding voltage (kV) |
|---|---|
| Example 1 | 1.58 |
| Comparative Example 3 | 1.17 |

As shown in Table 3, it was determined that the withstanding voltage is better when the electrodes are heated individually than when the electrodes are not heated individually. That is, Comparative Example 3 may be similar to Example in terms of adhesion stability of the separator and ventilation of the separator, but it was determined that the heat pressing step needed to be carried out for a longer period of time than in Example, and the withstanding voltage performance was not as good as in Example.

It was identified from Experimental Example that the electrode assembly manufactured by the apparatus and method for manufacturing the electrode assembly of the present invention has good stability of the electrodes and the separator, and has an adequate level of ventilation that does not cause deformation of the separator.

In addition, it was determined that an electrode assembly with excellent withstanding voltage and uniform performance could be manufactured.

## Claims

1. An apparatus for manufacturing an electrode assembly, the electrode assembly including a first electrode, a separator, and a second electrode, the apparatus comprising:
a stack table on which the first electrode, the separator, and the second electrode are stacked and the stacked material comprising the first electrode, the separator, and the second electrode is placed;
a separator supplier configured to supply the separator to the stack table;
a first electrode supplier configured to supply the first electrode to the stack table;
a second electrode supplier configured to supply the second electrode to the stack table;
a first electrode stacking unit configured to stack the first electrode supplied by the first electrode supplier onto the stack table; and
a second electrode stacking unit configured to stack the second electrode supplied by the second electrode supplier onto the stack table,
wherein at least of the first electrode supplier, the second electrode supplier, the first electrode stacking unit, and the second electrode stacking unit comprises a non-contact heater that does not come into direct physical contact with an object to be heated and that heats the object to be heated, and
wherein the object to be heated is at least one of the first electrode and the second electrode.

2. The apparatus of claim 1, wherein the apparatus is configured to stack the electrode assembly in a form such that the separator is folded and stacked in a zigzag manner, and the first electrode and the second electrode are alternately stacked between the stacked and folded separator.

3. The apparatus of claim 1, wherein the first electrode supplier further comprises a first electrode resting table on which the first electrode is rested before being stacked on the stack table by the first electrode stacking unit,
wherein the second electrode supplier further comprises a second electrode resting table on which the second electrode is rested before being stacked on the stack table by the second electrode stacking unit, and
wherein at least one of the first electrode resting table and the second electrode resting table comprises the non-contact heater.

4. The apparatus of claim 3, wherein the first electrode stacking unit further comprises a first suction head configured to vacuum suction the first electrode resting on the first electrode resting table,
wherein the second electrode stacking unit further comprises a second suction head configured to vacuum suction the second electrode resting on the second electrode resting table, and
wherein at least one of the first suction head and the second suction head comprises the non-contact heater.

5. The apparatus of claim 1, wherein the non-contact heater transfers heat by radiation or by induction heating to heat the first electrode or the second electrode.

6. The apparatus of claim 1, further comprising a temperature sensor configured to measure a surface temperature of the first electrode and the second electrode, and a controller configured to adjust a heating temperature of the non-contact heater based on the surface temperature measured by the temperature sensor, so as to adjust the surface temperature of the first electrode and the second electrode to within a controlled temperature range.

7. The apparatus of claim 6, wherein the controlled temperature range is from 50°C to 140°C.

8. The apparatus of claim 1, wherein the stack table comprises: a table body on which the first electrode, the separator, and the second electrode are stacked; and a stack table heater configured to heat the table body to heat the stacked material stacked on the table body.

9. The apparatus of claim 8, wherein the stack table heater is a non-contact heater that does not come into direct physical contact with the object to be heated and that heats the object to be heated.

10. The apparatus of claim 1, further comprising a holding device configured to grip the first electrode or the second electrode when the first electrode or the second electrode is stacked on the stack table and configured to fix the first electrode or the second electrode to the stack table.

11. The apparatus of claim 10, wherein the holding device is configured to grip and fixe an upper surface of the second electrode stacked on the highest side of the stack table when the first electrode is stacked on the stack table, and grips and fixes an upper surface of the first electrode stacked on the highest side of the stack table when the second electrode is stacked on the stack table.

12. The apparatus of claim 1, further comprising a press unit configured to heat and press the stacked material.

13. A method of manufacturing an electrode assembly, the electrode assembly including a first electrode, a separator, and a second electrode, the method comprising:
supplying the separator to a stack table and stacking the separator while heating the separator;
heating the first electrode with a non-contact heater configured to heat an object to be heated without coming into direct physical contact with the object to be heated, and supplying the first electrode to the stack table and stacking the first electrode; and
heating the second electrode with the non-contact heater configured to heat an object to be heated without coming into direct physical contact with the object to be heated, and supplying the second electrode to the stack table and stacking the second electrode,
wherein a stacked material includes the first electrode, the separator, and the second electrode positioned the stack table.

14. The method of claim 13, wherein the electrode assembly is stacked in a form such that the separator is folded and stacked in a zigzag manner, and the first electrode and the second electrode are alternately stacked between the stacked separator.

15. The method of claim 13, wherein the non-contact heater transfers heat by radiation or by induction heating to heat the first electrode and the second electrode.

16. The method of claim 13, wherein the step of heating the first electrode with the non-contact heater configured to heat an object to be heated without coming into physical direct contact with the object to be heated, and the supplying of the first electrode to the stack table includes:
measuring a surface temperature of the first electrode; and
adjusting the surface temperature of the first electrode to within a controlled temperature range by adjusting a heating temperature of the non-contact heater based on the measured surface temperature, and
wherein the step of heating the second electrode with the non-contact heater configured to heat an object to be heated without coming into direct physical contact with the object to be heated, and the supplying of the second electrode to the stack table includes:
measuring a surface temperature of the second electrode; and
adjusting the surface temperature of the second electrode to within the controlled temperature range by adjusting the heating temperature of the non-contact heater based on the measured surface temperature.

17. The method of claim 16, wherein the controlled temperature range is from 50°C to 140°C.

18. The method of claim 16, further comprising: stopping an operation of the non-contact heater when the surface temperature of the first electrode and the second electrode are adjusted to the controlled temperature range.

19. An electrode assembly comprising: a first electrode; a separator; and a second electrode, wherein the first electrode, the separator, and the second electrode are stacked along a stacking axis, and
wherein a thickness of the separator stacked in the middle of the electrode assembly is 1 to 1.09 times thicker than a thickness of the separator stacked at the outermost portion of the electrode assembly.

20. The electrode assembly of claim 19, wherein the separator of the electrode assembly is compressed relative to a separator supplied to manufacture the electrode assembly, and
wherein a separator positioned at the outermost portion of the electrode assembly has a compression ratio of 3% to 8%, and a separator positioned in the middle of the electrode assembly has a compression ratio of 3% to 8%.
